## Europäisches Patentamt

(19) **European Patent Office**

**Office européen des brevets**

(11) Veröffentlichungsnummer: **0 026 935**
**B1**

(12) **EUROPÄISCHE PATENTSCHRIFT**

(45) Veröffentlichungstag der Patentschrift:
18.05.83

(21) Anmeldenummer: 80106031.0

(22) Anmeldetag: 04.10.80

(51) Int. Cl.³: **F 16 K 1/226**

(54) Absperrklappe.

(30) Priorität: 09.10.79 CH 9080/79

(43) Veröffentlichungstag der Anmeldung:
**15.04.81 Patentblatt 81/15**

(45) Bekanntmachung des Hinweises auf die Patenterteilung:
**18.05.83 Patentblatt 83/20**

(84) Benannte Vertragsstaaten:
**AT BE DE FR GB IT LU NL SE**

(56) Entgegenhaltungen:

**DE-A-1 905 947**
**DE-A-2 229 978**
**DE-A-2 445 106**
**DE-B-1 214 932**
**GB-A-1 127 662**
**US-A-2 385 510**
**US-A-3 549 123**
**US-A-3 862 740**

(73) Patentinhaber: **GEORG FISCHER AKTIENGESELLSCHAFT, Mühlentalstrasse 105, CH-8201 Schaffhausen (CH)**

(72) Erfinder: **Hiltebrand, Eduard, Nordstrasse 137, CH-8200 Schaffhausen (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Absperrklappe

Die Erfindung betrifft eine Absperrklappe, deren Drehklappe über zwei Wellenenden einer durchgehenden Welle in dem Gehäuse gelagert ist, mit einem an der Umfangsfläche der Drehklappe angeordneten, einstückigen Dichtring, mit zwei gegenüberliegenden, die Wellenenden abdichtend umfassenden Augen.

Eine Absperrklappe der eingangs genannten Art ist durch die US-A-2 385 510 bekanntgeworden. An den Übergängen zwischen den zur Welle konzentrischen Ringen und dem an der Umfangsfläche der Drehklappe in einer Nute angeordneten Ring der Dichtung ist bei dieser Ausführung eine einwandfreie Abdichtung zwischen der Drehklappe, der Welle und der Lagerung der Welle im Gehäuse nicht möglich, was zu Leckverlusten des Durchflussmediums führt.

Bei der in der US-A-3 526 385 gezeigten Absperrklappe wird versucht die Dichtwirkung durch Anordnung von zylindrischen Partien an den zur Welle konzentrischen Ringen der Dichtung zu verbessern. Hierbei liegen die zylindrischen Partien in Ausnehmungen der Drehklappe wobei die zylindrische Partie mit ihrem Aussendurchmesser gegenüber der Drehklappe und mit ihrem Innendurchmesser gegenüber der runden Welle abdichten soll, was nur einigermassen möglich ist, wenn ein weicher Dichtungswerkstoff verwendet wird und die Herstelltoleranzen der entsprechenden Teile klein gehalten werden.

Auch das Einsetzen des mit den zylindrischen Partien versehenen Dichtungsringes in die Nuten und Ausnehmungen der Drehklappe erfordert aufgrund der verringerten inneren lichten Weite ein elastisches bzw. weiches und somit nicht verschleissfestes Dichtungsmaterial, welches durch die Bewegung der Drehklappe einem Verschleiss ausgesetzt ist.

Im weiteren Zusammenhang ist durch die DE-B-1 214 932 eine Auspuffmotorbremse bekanntgeworden, welche eine an einer Klappenwelle unverschiebbar befestigte Bremsklappe aufweist. Eine im Gehäuse abgestützte Feder drückt auf ein Ende der Klappenwelle, wodurch nur an einer Wellenlagerung eine dichtende Anlage zwischen der Bremsklappe, einem Zwischenring und einer Lagerbüchse gegeben ist und ein nachteiliger Reibverschleiss zwischen Feder und Klappenwelle entsteht. Aufgrund der anderen Verwendungsart weist die Klappe keinen Dichtring auf wodurch der Gegenstand und nicht zu der im Oberbegriff genannten Gattung gehört.

Aufgabe der vorliegenden Erfindung ist die Schaffung einer Absperrklappe der eingangs genannten Art, welche eine gute Abdichtung gegenüber aussen und keine Leckverluste auch bei geschlossener Drehklappe aufweist sowie die Verwendung einer abriebfesten und gegenüber den Durchflussmedien beständigen Dichtung ermöglicht.

Erfindungsgemäss wird dies durch die im kennzeichnenden Teil des Anspruches 1 angegebenen Lehre gelöst. Bevorzugte Ausführungsformen ergeben sich nach den weiteren Ansprüchen.

Durch die erfindungsgemässe Anordnung von Flanschen an der Dichtung, welche einwandfrei dichtend mittels Federkraft eingeklemmt sind, werden Leckverluste durch Abfluss entlang der Welle vermieden. Da dabei die Welle auf keinen Fall mit dem Durchflussmedium in Berührung kommt, kann diese auch bei aggressiven Medien aus Festigkeitsgründen aus Metall hergestellt werden, wenn die übrigen Teile aus Kunststoff bestehen.

Da die innere lichte Weite der Dichtung durch die Anordnung des Flansches nicht verringert wird, ist eine Montage der Dichtung auf die Drehklappe auch bei weniger weichen bzw. elastischen Material der Dichtung möglich, wodurch verschleissfeste Materialien verwendbar sind.

Durch die Einklemmung der Dichtung mittels Federkraft ist die Klemmkraft und somit die Dichtwirkung gleichbleibend auf Dauer festgelegt und es können keine unzulässige Flächenpressungen an der Dichtung durch unsachgemässe Montage entstehen. Allfällige Herstellungstoleranzen und Abnutzungen werden immer ausgeglichen.

Die Erfindung ist in den beiliegenden Zeichnungen anhand eines Ausführungsbeispieles dargestellt und nachfolgend beschrieben. Es zeigen

Fig. 1 einen Querschnitt durch eine Absperrklappe

Fig. 2 einen Schnitt entlang der Linien II-II von Fig. 1

Fig. 3 eine Ansicht der Dichtung für die Drehklappe der Absperrklappe

Fig. 4 eine Ansicht mit Teilschnitt entlang der Linie IV-IV von Fig. 3 und

Fig. 5 ein Teilschnitt entlang der Linie V-V von Fig. 2 in vergrösserter Darstellung.

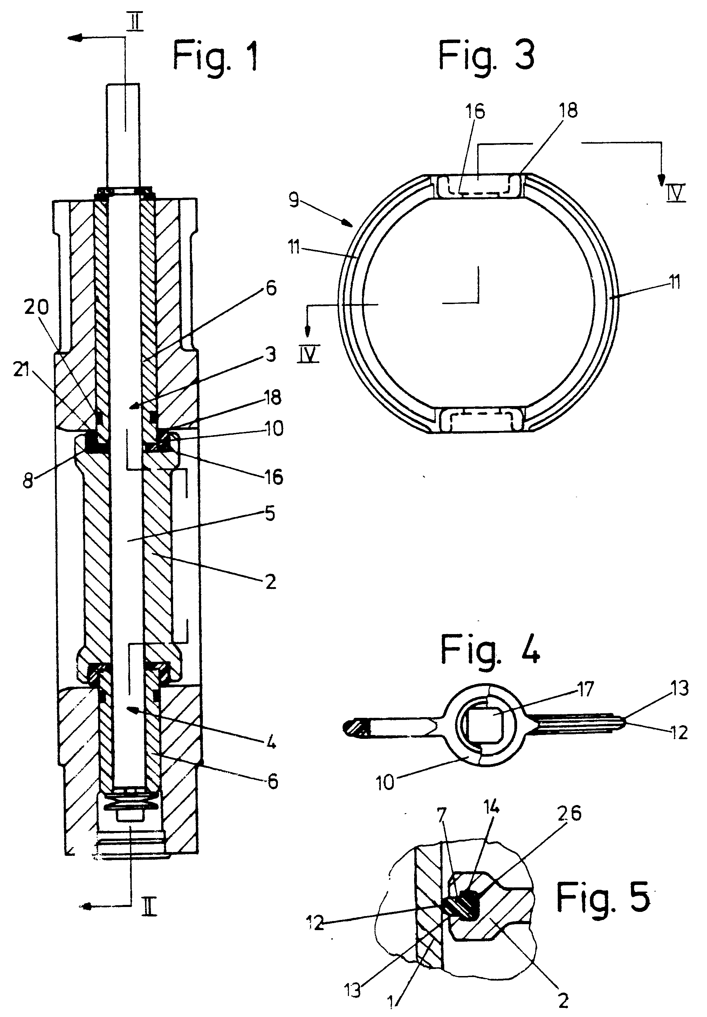

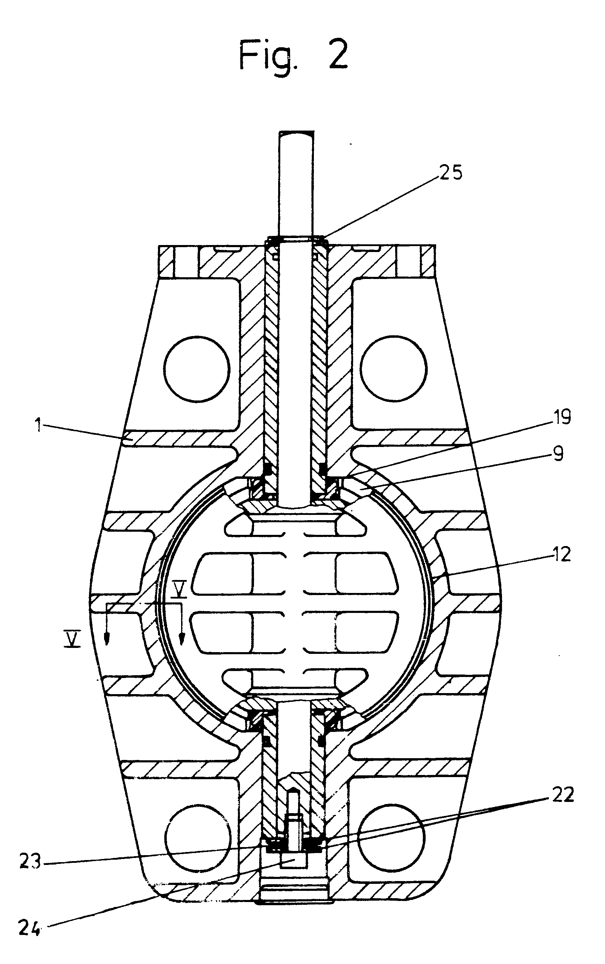

Die Fig. 1 und 2 zeigen eine Absperrklappe, welche ein zwischen Rohrleitungen einbaubares Gehäuse 1 aufweist, in welchem eine kreisförmige Drehklappe 2 mittels zwei Wellenenden 3 und 4 drehbar gelagert ist. Durch die Drehklappe 2 ist eine Welle 5, welche vorzugsweise im Querschnitt viereckig ausgebildet ist, gesteckt, auf welcher beidseitig der Drehklappe 2 Büchsen 6 aufgeschoben sind, welche die beiden Wellenenden 3 und 4 bilden. Die Welle 5 ragt einseitig aus dem Gehäuse 1 heraus wobei hier ein weiter nicht dargestelltes Stellglied, wie z.B. ein Handgriff oder ein Stellantrieb, angeordnet ist. Durch die im Querschnitt viereckige Ausbildung der Welle 5 ist deren drehfeste Verbindung einerseits mit der Drehklappe 2 und den Büchsen 6 und andererseits mit dem weiter nicht dargestellten Stellglied mit niedrigen spezifischen Flächenpressungen gegeben. Die Drehklappe 2 ist an deren Umfang mit einer Nute 7 (siehe Fig. 5) und konzentrisch zu der Welle 5 mit gegenüberliegenden zylindrischen Ausnehmungen 8 versehen in denen ein Dichtring 9 angeordnet ist.

Der in den Fig. 3, 4 und 5 dargestellte Dichtring 9 besteht aus den beiden gegenüberliegenden Augen 10 und zwei Ringhälften 11, welche die beiden Augen 10 verbinden und ist aus einem Stück hergestellt. Die Ringhälften 11 weisen am Aussendurchmesser eine gerade Dichtfläche 12 auf, welche durch zwei schräge Flächen 13 begrenzt ist. An den Seitenflächen der Ringhälften 11 sind Vorsprünge 14 angebracht, welche in seitlichen Ausnehmungen 26 der Nute 7 zu liegen kommen, wodurch der Dichtring 9 nach aussen in der Drehklappe 2 gehalten wird (siehe Fig. 5).

Die Augen 10 sind zylindrisch, vorzugsweise als ein Rohrstück mit einem Kreisringquerschnitt ausgebildet und mit jeweils einem zur Welle 5 radial einwärts gerichteten Flansch 16 versehen, welcher vorzugsweise eine viereckig ausgebildete Öffnung 17 aufweist. Die dem Flansch 16 gegenüberliegende Seite des Auges 10 weist eine ebene Dichtfläche 18 auf, welche an einer geraden Innenfläche 19 des Gehäuses dichtend anliegt (siehe Fig. 2).

Als zusätzliche Dichtungen gegen Aussen sind an den Büchsen 6 Dichtungsringe 20 angeordnet.

Der Dichtring ist aus einem abriebfesten und gegen die meisten Durchflussmedien beständigen Elastomer hergestellt dessen Härte vorzugsweise ca. 60-80 Shore beträgt.

Die Elastizität des Dichtringes 9 ist dabei gerade noch so gross, dass die in die Nute 7 und die Ausnehmungen 8 der Drehklappe 2 eingesetzt werden kann, aber durch den Druck des Durchflussmediums oder beim Drehen der Drehklappe 2 keine Deformationen an den Dichtflächen 12, 18 entstehen.

Die Flansche 16 des Dichtringes 9 sind wie aus den Fig. 1 und 2 ersichtlich in der Ausnehmung 8 zwischen der Drehklappe 2 und Stirnflächen 21 der Büchsen 6 eingeklemmt angeordnet. Die Kraft für die Verklemmung wird durch am unteren Ende der Welle 5 zwischen Scheiben 22 angeordneten vorgespannten Federelement 23, vorzugsweise Tellerfedern, erzeugt, welche mittels einer Schraube 24 befestigt und verspannt sind. Am oberen Ende der Welle 5 sind die Büchsen 6 durch einen Sicherungsring 25 gehalten. Alle auf der Welle 5 aufgesteckten Teile 6, 2, 16 liegen mit durch die Federelemente 23 vorgegebenen Druck aneinander, so dass damit die Herstellungstoleranzen ausgeglichen werden und die Flansche 16 des Dichtringes 9 mit einer vorgegebenen, gleichbleibenden Kraft eingeklemmt sind.

Die am Gehäuse 1 anliegenden Dichtflächen 12 und 18 weisen durch ihre grossen Anlageflächen eine geringe spezifische Flächenbelastung auf, wodurch der Verschleiss des Dichtringes niedrig gehalten wird.

Gehäuse 1, Drehklappe 2 und die Büchsen 6 sind vorzugsweise aus einem Kunststoff wie z.B. Polyvinylchlorid oder Polypropylen hergestellt, wodurch die Absperrklappe auch für aggressive Medien wie z.B. Säuren und Laugen verwendbar ist.

Da aus Festigkeitsgründen die Welle 5 aus Metall besteht, ist hierbei die Abdichtung der Welle 5 gegenüber dem Durchflussmedium besonders wichtig, wobei dies wie bereits beschrieben durch die mit vorgegebener, gleichbleibender Pressung eingeklemmten Flansche 16 des Dichtringes 9 erreicht wird.

## Patentansprüche

1. Absperrklappe, deren Drehklappe (2) über zwei Wellenenden (3, 4) einer durchgehenden Welle (5) in dem Gehäuse (1) gelagert ist, mit einem an der Umfangsfläche der Drehklappe (2) angeordneten, einstückigen Dichtring (9) mit zwei gegenüberliegenden, die Wellenenden (3, 4) abdichtend konzentrisch umfassenden Augen (10), dadurch gekennzeichnet, dass die konzentrisch zu den Wellenenden (3, 4) angeordneten Augen (10) des Dichtringes (9) je einen zur Welle (5) radial einwärts gerichteten Flansch (16) aufweisen, welcher jeweils zwischen der Drehklappe (2) und einer durch am Ende einer axial auf der Welle (5) verschiebbaren Büchse (6) gebildeten Stirnfläche (21) durch axiale Vorspannung eingeklemmt ist, wobei vorgespannte Federelemente (23) zwischen einem Wellenende (4) und der verschiebbaren Büchse (6) angeordnet sind.

2. Absperrklappe nach Anspruch 1, dadurch gekennzeichnet, dass die Büchsen (6) auf die Welle (5) aufgeschoben und gegenüber dieser nicht verdrehbar sind.

3. Absperrklappe nach Anspruch 2, dadurch gekennzeichnet, dass die Welle (5) einen viereckigen Querschnitt und der Flansch (16) eine viereckig ausgebildete Öffnung (17) aufweist.

4. Absperrklappe nach einem der Ansprüche 1 bis 3, dadurch gekennzeichnet, dass die konzentrisch zu den Wellenenden (3, 4) angeordneten Augen (10) des Dichtringes (9) zylindrisch ausgebildet und in je einer zylindrischen Ausnehmung (8) der Drehklappe (2) angeordnet sind.

5. Absperrklappe nach Anspruch 4, dadurch gekennzeichnet, dass die zylindrisch ausgebildeten Augen (10) eine am Gehäuse (1) anliegende ebene Dichtfläche (18) aufweisen.

6. Absperrklappe nach einem der Ansprüche 1 bis 5, dadurch gekennzeichnet, dass die Kraft für die Verklemmung der Flansche (16) des Dichtringes (9) durch die Vorspannung der Federelemente (23) bestimmbar ist.

7. Absperrklappe nach einem der Ansprüche 1 bis 6, dadurch gekennzeichnet, dass der Dichtring (9) aus einem Elastomer mit einer Härte von 60 bis 80 Shore hergestellt ist.

## Claims

1. Butterfly-valve, whose rotary valve (2) is mounted in the housing (1) by means of two shaft ends (3, 4) of a through-going shaft (5), having a one-piece sealing ring (9) arranged on the periphery of the rotary valve (2), having two eyelets (10) in opposite arrangement concentrically enclosing and sealing the shaft ends (3, 4), characterised in that the eyelets (10) of the sealing ring (9) arranged concentrically to the shaft ends (3, 4) each comprise a flange (16) directed radially inwards to the shaft (5), which is fastened by axial prestressing in each case between the rotary valve (2) and a frontal face (21) formed at the end of a sleeve (6) which can be pushed axially on to the shaft (5), prestressed spring elements (23) being arranged between one shaft end (4) and the displaceable sleeve (6).

2. Butterfly-valve according to claim 1, characterised in that the sleeves (6) are pushed on to the shaft (5) and can not be rotated relative thereto.

3. Butterfly-valve according to claim 2, characterised in that the shaft (5) has a quadrilateral cross-section and the flange (16) has a quadrilateral aperture (17).

4. Butterfly-valve according to one of the claims 1 to 3, characterised in that the eyelets (10) of the sealing ring (9) arranged concentrically to the shaft ends (3, 4) are each of a cylindrical design and are arranged in a cylindrical recess (8) of the rotary valve (2).

5. Butterfly-valve according to claim 4, characterised in that the cylindrical eyelets (10) have a plane sealing surface (18) abutting the housing (1).

6. Butterfly-valve according to one of the claims 1 to 5, characterised in that the force for fastening the flanges (16) of the sealing ring (9) is definable by the prestressing of the spring elements (23).

7. Butterfly-valve according to one of the claims 1 to 6, characterised in that the sealing ring (9) is made of an elastomer with a hardness of 60 to 80 shores.

## Revendications

1. Vanne papillon, dont l'obturateur rotatif ou ''papillon'' (2) est monté dans le boîtier (1) par l'intermédiaire de deux tourillons (3, 4) d'un arbre traversier (5), vanne qui comporte un anneau d'étanchéité (9) d'une seule pièce disposé à la surface périphérique du papillon (2) et présentant deux oeillets (10) opposés entourant concentriquement de façon étanchéisante les tourillons (3, 4), ladite vanne étant caractérisée en ce que les oeillets (10) de l'anneau d'étanchéité (9), disposés concentriquement aux tourillons (3, 4), présentent chacun une collerette (16) orientée radialement vers l'intérieur par rapport à l'arbre (5), et qui est serrée par précompression axiale entre le papillon (2) et une surface frontale (21) formée à l'extrémité d'une douille (6) déplaçable axialement sur l'arbre (5), tandis que des éléments à ressort précomprimés (23) sont disposés entre l'un des tourillons (4) et la douille déplaçable (6) associée.

2. Vanne papillon suivant la revendication 1, caractérisée en ce que les douilles (6) sont enfilées sur l'arbre (5) et ne peuvent pas tourner par rapport à celui-ci.

3. Vanne papillon suivant la revendication 2, caractérisée en ce que l'arbre (5) présente une section droite carrée, et la collerette (16), une ouverture (17) de forme carrée.

4. Vanne papillon suivant l'une des revendications 1 à 3, caractérisée en ce que les oeillets (10) de l'anneau d'étanchéité (9), disposés concentriquement par rapport aux tourillons (3, 4), sont réalisés sous une forme cylindrique, et sont disposés chacun dans un évidement cylindrique (8) du papillon (2).

5. Vanne papillon suivant la revendication 4, caractérisée en ce que les oeillets (10) de forme cylindrique présentent une surface d'étanchéité plane (18) appliquée contre le boîtier (1).

6. Vanne papillon suivant l'une des revendications 1 à 5, caractérisée en ce que la force nécessaire au serrage des collerettes (16) de l'anneau d'étanchéité (9) est déterminable par la précompression des éléments à ressort (23).

7. Vanne papillon suivant l'une des revendications 1 à 6, caractérisée en ce que l'anneau d'étanchéité (9) est fabriqué en un élastomère d'une dureté de 60 à 80 Shore.

Fig. 1

Fig. 3

Fig. 4

Fig. 5

# Fig. 2